# EUROPEAN PATENT APPLICATION

(11) **EP 1 134 476 A1**
(43) Date of publication of application: **19.09.2001**
(21) Application number: 01200939.5
(22) Date of filing: 14.03.2001
(51) Int. Cl.: F16L 39/00, F16L 43/00

(54) **Bend for discharging plants**

(30) Priority: 14.03.2000 NL 1014637
(71) Applicant: UBBINK NEDERLAND B.V., NL-6984 AA Doesburg (NL)
(72) Inventor: Van Dijk, Floris, 6984 AA Doesburg (NL)
(74) Representative: Ferguson, Alexander

(57) **Abstract**

Bend for debouching structures of closed gas or oil appliances having an inner tube (1) for discharge of combustion air and an outer tube placed around the inner tube, the outer tube (12a,12b) being placed concentrically around the inner tube in order to define therewith an annular line for supply of combustion air to the gas or oil appliance, in which the inner tube and the outer tube have a fluently curved course in a main plane and in which only transverse to the main plane air guidance partitions (7) are present in the annular space, which guidance partitions substantially follow the curve of the bend.

## Description

The invention relates to a bend for accommodation in lines between closed gas or oil appliances and debouching structures for them. This may for instance regard lines to a facade debouching structure, in which the bend usually has to bridge 90 degrees, or lines to vertical debouching structures, in which with the help of two oppositely placed bends a -horizontal- buckle in the line is being realised.

In closed gas or oil appliances there is usually question of a double, concentric line, consisting of an inner tube for discharge of combustion gas and an outer tube which, with the inner tube, defines an annular supply line for combustion air.

Such a bend is known, in which both the outer tube and the inner tube consist of two identical halves divided according to a plane of symmetry or main plane. At the dividing plane, each inner tube half is provided with two opposite spacer partitions which extend to the outer tube and follow the curve. When assembling the partitions of each inner tube half are placed against each other and are connected to each other by means of welding or riveting. After that both outer tube halves are placed around it and they are welded or riveted to each other and to the partitions. Said known bend relatively has a lot of parts and as a result requires a lot of work to assemble. The spacer partitions hardly cooperate in the promotion of the flow of air or gas trough the curve, they rather seem to increase the resistance against it.

Furthermore a bend having a sharp buckle is known, in which at the location of the buckle area between the inner tube and the outer tube four radial spacer partitions are present, that are each time at 90 degrees with respect to each other. The resistance against air/gas flow is increased here because of the partitions that lie in the plane of symmetry and also because of the buckled partitions that are transverse to them.

It is an object of the invention to provide a bend that improves on this. To that end the invention provides a bend for debouching structures of closed gas or oil appliances having an inner tube for discharge of combustion air and an outer tube placed around the inner tube, the outer tube being placed concentrically around the inner tube in order to define therewith an annular line for supply of combustion air to the gas or oil appliance, in which the inner tube and the outer tube have a fluently curved course in a main plane and in which only transverse to the main plane air guidance partitions are present in the annular space, which guidance partitions substantially follow the curve of the bend.

In the bend according to the invention no resistance increasing partitions lying in the main plane are present, but only guidance partitions that guide the air in a fluent manner around the curve. As a result the resistance increase resulting from the curve can remain limited, which is advantageous to the effectiveness of the fan of the gas or oil appliance.

The flow conditions are further optimized when the partitions -considered in cross-section- are situated straight opposite each other.

The flow conditions are even further improved when the partitions are situated radially perpendicular to the main plane. Preferably the main plane forms a plane of symmetry of the bend.

In an embodiment which is easy to manufacture -such as by injection moulding- the partitions are formed integral with the inner tube. During assembling, arranging the outer tube, the partitions can then be a placement aid for it.

Assembling can be facilitated when the outer tube is longitudinally divided, preferably according to the plane of symmetry.

The invention will now be elucidated on the basis of an exemplary embodiment shown in the attached figures, in which:
Figure 1 shows an inner tube for accommodation of an example of a bend according to the invention; and
Figure 2 shows a disassembled view on a bend according to the invention, having an inner tube substantially like the one of figure 1.

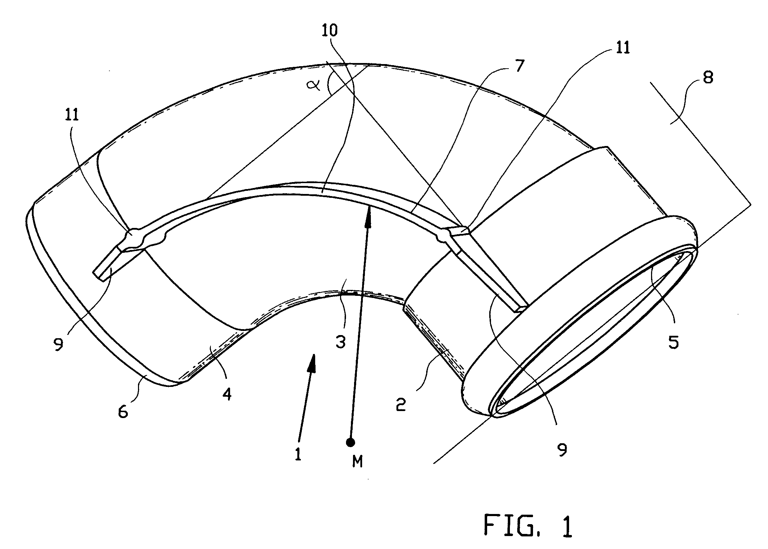

In figure 1 an inner tube 1, bent in a fluent manner over an angle α is shown having a straight first end section 2, before the bent middle section 3 and a straight second end section 4. With the circular end edges 5 and 6, respectively, the inner tube 1 can be connected to the other inner tubes of a debouching structure or line for a closed gas or oil appliance.

The inner tube 1 has a plane of symmetry 8, in which plane the curvature is situated as well. In radial direction transverse to the plane of symmetry 8 a partition 7 is formed integral with the inner tube 1, the partition having a fluently bent middle section 10 with thickened ends 11 and with end sections 9 that incline radially to the inside. It will be understood that diametrally opposite, on the other side of the inner tube 1, a similar partition has been formed. The curves of the inner tube 1 and the middle tube 1 -in projection on plane 8- at least almost have the same centre M.

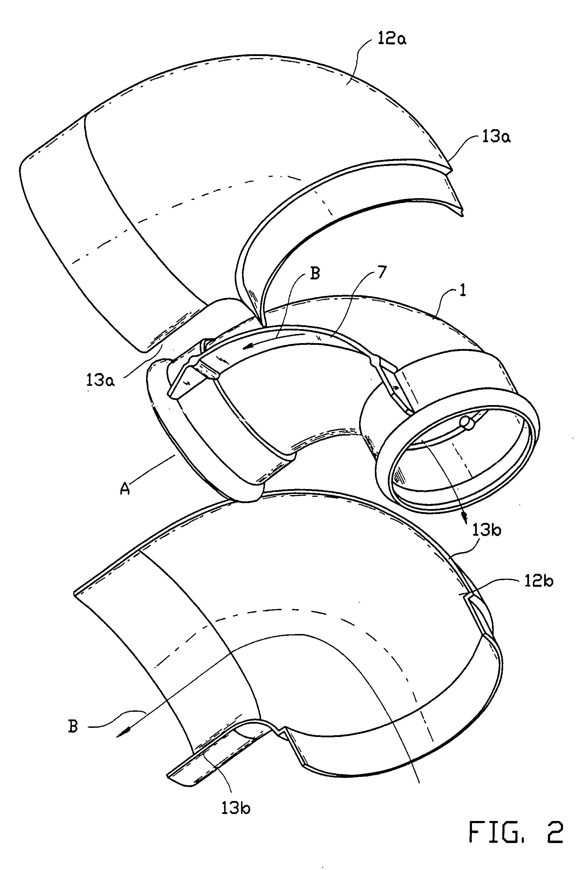

As can be seen in figure 2 the inner tube 1 (it is noted that the inner tube in this figure -contrary to figure 1- is provided with a socket at both ends) is accommodated in an outer tube 12a, 12b, in this case consisting of two identical halves which can be connected to each other beforehand or by the fitter, for instance by means of glue or screws. When this is done beforehand, welding can also be used.

The inner tube 1 can for instance permit a discharge for combustion gasses pass in the direction A, whereas the annular space formed between the outer tube 12a, b, and the inner tube 1 can be used for a supply flow of combustion air in the direction B. The fluently bent guidance partitions 7 not only ensure accurate placement of the outer tube 12a, b, but also a fluent guidance for the combustion air along the flow path B, so that resistance losses are limited to a minimum.

The bend in this example forms an angle α of 90 degrees. In particular when a vertical line has to be offset horizontally, use can also be made of two bends of 45 degrees placed opposite each other and to be connected to each other.

Furthermore it will be possible, when using suitable shapes, to form the outer tube as one unity. The outer tube instead of the inner tube can be provided with the guidance partitions 7 formed integral with the inner surface, which can take place in a very simple manner when use is made of an outer tube having two longitudinal halves, such as halves 12a, 12b of figure 2.

## Claims

1. Bend for debouching structures of closed gas or oil appliances having an inner tube for discharge of combustion air and an outer tube placed around the inner tube, the outer tube being placed concentrically around the inner tube in order to define therewith an annular line for supply of combustion air to the gas or oil appliance, in which the inner tube and the outer tube have a fluently curved course in a main plane and in which only transverse to the main plane air guidance partitions are present in the annular space, which guidance partitions substantially follow the curve of the bend.

2. Bend according to claim 1, in which the partitions -considered in cross-section- are situated straight opposite each other.

3. Bend according to claim 1 or 2, in which the partitions are situated perpendicular to the main plane.

4. Bend according to claim 1, 2 or 3, in which the main plane forms a plane of symmetry of the bend.

5. Bend according to any one of the claims 1-4, in which the partitions are formed integral with the inner tube.

6. Bend according to any one of the claims 1-4, in which the partitions are formed integral with the inner tube.

7. Bend according to any one of the preceding claims, in which the outer tube is longitudinally divided.

8. Bend according to claim 7, in which the outer tube is longitudinally divided according to the plane of symmetry.

9. Bend according to any one of the preceding claims, in which the guidance partitions are situated exactly radial.

10. Bend provided with one or more of the characterizing measures described in the attached description and/or shown in the attached drawings.

11. Debouching structure having supply and discharge lines for a closed gas or oil appliance, comprising a bend according to any one of the preceding claims.
